# EUROPEAN PATENT APPLICATION

(11) **EP 4 686 236 A1**
(43) Date of publication of application: **28.01.2026**
(21) Application number: 25191875.1
(22) Date of filing: 25.07.2025
(51) Int. Cl.: H04W 4/80, H04W 74/0833, H04W 74/00, H04W 4/70, H04W 74/0838, H04W 74/08, H04W 72/40, H04W 84/18

(54) **SYSTEM AND METHOD FOR RANDOM ACCESS FOR AMBIENT INTERNET OF THINGS DEVICES**

(30) Priority: 26.07.2024 US 202463676135 P
(71) Applicant: Samsung Electronics Co., Ltd., Suwon-si, Gyeonggi-do 16677 (KR)
(72) Inventor: ZHOU, Yuhan, San Jose, CA, 95134 (US); FOUAD, Yaser Mohamed Mostafa Kamal, San Jose, CA, 95134 (US); SARTORI, Philippe Jean Marc Michel, San Jose, CA, 95134 (US); HEO, Youn Hyoung, San Jose, CA, 95134 (US)
(74) Representative: Kuhnen & Wacker Patent- und Rechtsanwaltsbüro PartG mbB

(57) **Abstract**

A system and a method includes receiving (1301), by an ambient Internet of Things, A-IoT, device, an energizing signal; receiving (1302), by the A-IoT device, a paging message from a network node, the paging message including one or more configuration parameters,
determining (1303) a resource for a random access transmission from the A-IoT device using the one or more configuration parameters in the paging message, and transmitting (1304), by the A-IoT device, a random access transmission to the network node in response to the paging message

## Description

### TECHNICAL FIELD

The disclosure generally relates to wireless communication systems. More particularly, the subject matter disclosed herein relates to improvements to random access procedures for ambient Internet of things (A-IoT) systems.

### SUMMARY

A-IoT systems enable communication with large numbers of ultra-low power devices, such as battery-less (e.g., passive) or energy-constrained devices, in applications such as non-public network for logistics, electronic shelf label, supply chain tracking, smart infrastructure, environmental sensing, and others. These systems require lightweight signaling and energy-efficient access procedures due to the constrained capabilities of the devices.

Prior approaches have used simple slotted-ALOHA-based random access techniques, where A-IoT devices opportunistically transmit access messages within scheduled time slots, and limited signaling may be conveyed via downlink paging or reader scheduling messages.

One issue with the above approach is that slotted-ALOHA suffers from significant inefficiencies, such as collisions between multiple devices selecting the same access slot, leading to low throughput (e.g., ~35%) and repeated access attempts. In addition, other schemes do not provide mechanisms for flexible resource configuration, adaptive contention resolution, or access diversity, limiting their scalability and robustness in dense A-IoT deployments.

To overcome these types of issues, systems and methods are described herein for enhanced random access in A-IoT systems. In particular, the disclosure provides a mechanism for embedding random access configuration within a reader-to-device (R2D) transmission that may carry an A-IoT paging message. This configuration may specify timing and frequency resources, modulation formats such as on-off keying (OOK) or binary phase shift keying (BPSK), access type (contention-based or contention-free), and preamble selection rules. The disclosure also introduces several enhancements to the slotted-ALOHA baseline, including framed and dynamic framed slotted-ALOHA, slotted-ALOHA with muting, diversity slotted-ALOHA, and contention resolution diversity slotted-ALOHA (CRDSA).

The above approaches improve on previous methods because they enable more efficient use of access resources, reduce collisions through coordinated scheduling and retransmission diversity, and allow ultra-low power devices to communicate with minimal overhead. These techniques support flexible system design and increase overall access success probability in A-IoT systems.

According to an embodiment, a method includes receiving, by an A-IoT device, an energizing signal; receiving, by the A-IoT device, a paging message from a network node, the paging message including one or more configuration parameters, determining a resource for a random access transmission from the A-IoT device using the one or more configuration parameters in the paging message, and transmitting, by the A-IoT device, a random access transmission to the network node in response to the paging message.

According to an embodiment, a method includes transmitting, by a network node, a paging message to an A-IoT device, the paging message including one or more configuration parameters related to scheduling information for a random access transmission from the A-IoT device, and receiving, by the network node, the random access transmission from the A-IoT device in response to the paging message.

According to an embodiment, a non-transitory computer-readable medium storing instructions is disclosed. The instructions, when executed by a processor of an A-IoT device, cause the processor to receive an energizing signal; receive a paging message from a network node, the paging message including one or more configuration parameters; determine a resource for a random access transmission using the one or more configuration parameters in the paging message; and transmit a random access transmission to the network node in response to the paging message.

### BRIEF DESCRIPTION OF THE DRAWING

In the following section, the aspects of the subject matter disclosed herein will be described with reference to exemplary embodiments illustrated in the figures, in which:
FIG. 1 illustrates a transmitting device or a receiving device in a communication system, according to an embodiment;
FIG. 2 illustrates an example connectivity topology that may be used in A-IoT systems for facilitating communication between a base station and one or more A-IoT devices, according to an embodiment;
FIG. 3 illustrates an example connectivity topology that may be used in A-IoT systems for facilitating communication between a base station and one or more A-IoT devices, according to an embodiment;
FIG. 4 illustrates an example architecture of an ultra-low power A-IoT device, according to an embodiment;
FIG. 5 illustrates an example architecture of an ultra-low power A-IoT device with a radio frequency-envelope detection (RF-ED) receiver, according to an embodiment;
FIG. 6 illustrates an example architecture of an ultra-low power A-IoT device with an RF-ED receiver, according to an embodiment;
FIG. 7 illustrates an example architecture of an ultra-low power A-IoT device with an intermediate frequency (IF) receiver, according to an embodiment;
FIG. 8 illustrates an example architecture of an ultra-low power A-IoT device with a zero intermediate frequency (ZIF) receiver, according to an embodiment;
FIG. 9 is a signaling diagram illustrating an access stratum (AS) procedure between an A-IoT device and reader, according to an embodiment;
FIG. 10 is a flowchart illustrating operation of a device configuring random access transmissions, according to an embodiment;
FIG. 11 is a flowchart illustrating an operation of a device incorporating a muting mechanism to manage A-IoT device transmissions, according to an embodiment;
FIG. 12 is a flowchart illustrating an operation incorporating framed slotted ALOHA to manage A-IoT device transmissions, according to an embodiment;
FIG. 13 is a flowchart illustrating a method for configuring random access communication for an A-IoT device, according to an embodiment;
FIG. 14 is a block diagram of an electronic device in a network environment, according to an embodiment; and
FIG. 15 is a system including a UE and a base station, in communication with each other, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts or modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

"Reader" as used herein refers to a network node or access point that is capable of transmitting downlink signals, including paging messages, to one or more low-complexity A-IoT devices. The reader may be responsible for broadcasting configuration parameters for random access procedures and may receive corresponding uplink transmissions. Some examples of a reader are a base station, repeater, relay, or other infrastructure node that participates in initial access and contention resolution.

"Device" as used herein refers to a terminal that is capable of receiving downlink transmissions (e.g., paging messages) and transmitting uplink transmissions based on limited configuration information. The device may correspond to an A-IoT terminal operating under constrained energy and signaling conditions, such as a passive or low power electronic devices including radio frequency identification (RFID) tags, battery-free sensors, smart packaging labels, and wearable biosensors.

"ALOHA" is a known term in the art and refers to a class of random access procedures in which a device transmits an uplink message without prior scheduling or coordination.

In the context of initial access procedures for A-IoT systems, communications between a device and a reader may be divided into uplink and downlink directions, referred to herein as device-to-reader (D2R) and R2D, respectively. The R2D direction refers to downlink transmissions sent by the reader, such as paging messages that include configuration information for random access. The D2R direction refers to uplink transmissions sent by the device, including random access attempts. A random access procedure may involve a sequence of messages commonly referred to as message 1 (Msg1), message 2 (Msg2), message 3 (Msg3), and message 4 (Msg4), which together support initial access and, if necessary, contention resolution.

Msg1 is transmitted in the D2R direction by the device to initiate access. It may be sent after receiving a paging message that provides the necessary configuration parameters, such as timing, frequency, modulation, and preamble. Msg1 may include a randomly selected identifier or preamble, such as in contention-based access scenarios. Upon receiving Msg1, the reader may respond with Msg2, transmitted in the R2D direction. Msg2 may acknowledge receipt of Msg1 and may include additional configuration, scheduling, or control information. If contention resolution is needed, such as if multiple devices attempted access simultaneously using the same preamble, then the device may transmit Msg3 in the D2R direction. Msg3 may include a more specific identifier or payload to help the reader distinguish between contending devices. The reader may then transmit Msg4 in the R2D direction to complete contention resolution and confirm successful access.

This messaging exchange enables an ultra-low power device to establish communication with the network using a lightweight, configuration-driven process that minimizes signaling overhead and energy consumption. In some embodiments, one or more of Msg3 or Msg4 may be omitted depending on the level of contention or the type of access (e.g., contention-free).

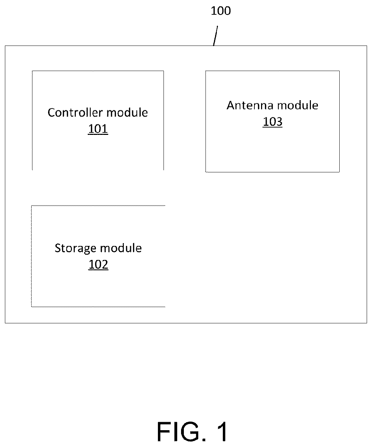

FIG. 1 illustrates a transmitting device or a receiving device in a communication system, according to an embodiment.

Referring to FIG. 1, the device 100 may function as a reader (e.g., a base station or other network node) or as an A-IoT device (e.g., a terminal or other low powered electronic device), such as an ultra-low power tag or sensor. The device 100 includes a controller module 101 (e.g., one or more processors), a storage module 102, and an antenna module 103. In various embodiments, the device 100 may be configured to transmit or receive paging messages, random access signals, and control messages in accordance with the random access procedures described herein.

The controller module 101 may perform processing tasks related to ambient communication, including management of random access occasions, paging operations, and collision resolution techniques. For example, when functioning as a reader, the controller module 101 may generate R2D transmissions that carry paging messages and random access configurations such as access slot scheduling, modulation type (e.g., OOK or BPSK), and muting indicators. When functioning as an A-IoT device, the controller module 101 may interpret such configurations and manage the timing and format of its random access messages (e.g., Msg1 or Msg3) transmitted during slotted-ALOHA access opportunities.

The storage module 102 may include transitory or non-transitory memory storing executable instructions and parameters for managing A-IoT access procedures. For example, the storage module 102 may store slotted-ALOHA access window definitions, timing offset values, modulation schemes, preamble identifiers, and retry logic. When the device functions as a reader, the storage module 102 may include configuration rules for device prioritization, access muting, diversity scheduling, and framed access management. The storage module 102 may also store protocol stack elements for communication procedures, including lightweight medium access control (MAC) and physical layer (PHY) layer logic suitable for A-IoT systems.

The antenna module 103 may include one or more antennas configured to wirelessly transmit or receive access-related messages, including R2D transmissions, random access requests (e.g., Msg1), responses (e.g., Msg2), and other uplink or downlink data. The antenna module 103 may be optimized for intermittent, energy-efficient operation suitable for battery-less (e.g., passive) or energy-constrained devices. When operating as a reader, the antenna module 103 may coordinate responses to detected A-IoT signals and issue contention resolution messages. When operating as an A-IoT device, the antenna module 103 may perform low-power signal transmission aligned with designated access occasions and retry windows.

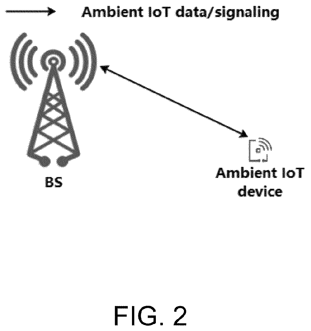

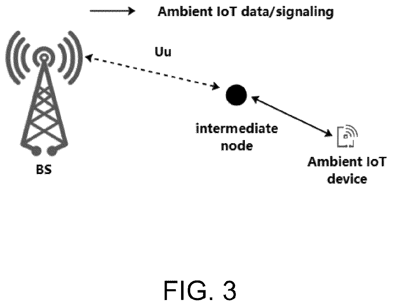

FIGS. 2 and 3 illustrate example connectivity topologies that may be used in A-IoT systems for facilitating communication between a base station and one or more A-IoT devices, according to various embodiments. These figures are intended to provide representative system configurations and are not limiting.

FIG. 2 illustrates a direct connectivity topology in which an A-IoT device communicates directly with a base station (BS). In this configuration, the BS transmits and receives A-IoT data and signaling over a wireless interface, without the need for any intermediate relay or aggregation node. This topology may be employed when the A-IoT device is within the coverage range of the BS and the signal conditions are sufficient to support reliable low-power communication.

FIG. 3 illustrates a connectivity topology in which communication between the BS and the A-IoT device is mediated by an intermediate node. In this configuration, the BS exchanges A-IoT data and signaling with the intermediate node over a Uu interface (the wireless link between the BS and the intermediate node), and the intermediate node relays or processes the information before forwarding it to the A-IoT device. The intermediate node may serve various functions such as signal boosting, scheduling coordination, pre-processing, or localized reader functionality. This topology is useful for extending network reach into areas where direct connectivity may be unreliable due to distance, blockage, or energy constraints on the A-IoT device.

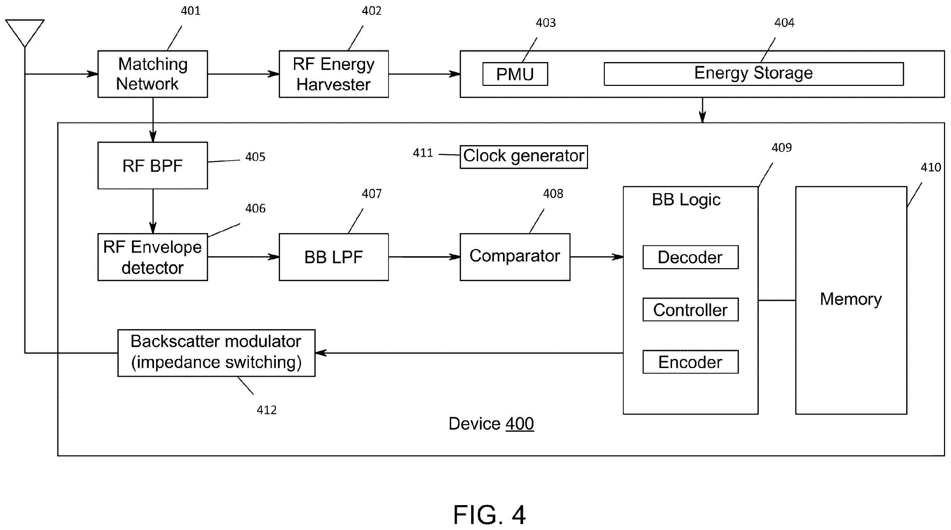

FIG. 4 illustrates an example architecture of an ultra-low power A-IoT device, according to an embodiment.

Referring to FIG. 4, device 400 is configured to operate with highly constrained signaling capabilities, including a downlink path for receiving paging messages and an uplink path for transmitting using backscatter modulation.

An antenna is coupled to a matching network 401 and a radio frequency (RF) energy harvester 402. The harvested energy is supplied to a power management unit (PMU) 403 and optionally stored in an energy storage module 404, enabling self-sustaining or battery-assisted operation. The receive path includes an RF bandpass filter (BPF) 405, envelope detector 406, and baseband low-pass filter (BB LPF) 407. The envelope detector 406 enables demodulation of paging messages.

The filtered baseband signal is passed to a comparator 408 and processed by baseband logic 409, which includes decoding and control functionality. A memory module 410 stores relevant configuration data. A clock generator 411 provides timing references for device operation.

The baseband logic 409 is configured to process downlink paging messages to determine whether the device is being addressed and to extract configuration parameters for uplink access. These parameters may include timing windows, frequency allocations, and modulation settings for the initial uplink message (Msg1). In this manner, the device can engage in initial access procedures using only the information provided in the paging message, without requiring acquisition of additional system broadcast channels.

For uplink communication, device 400 includes a backscatter modulator 412 that performs impedance modulation of the antenna to reflect and encode data onto an external carrier wave. This allows for highly power-efficient transmission without the need for an active RF transmitter.

Device 400 enables support for initial access using paging-driven configuration and avoids reliance on full system information, thereby enabling operation in scenarios with intermittent energy availability and reduced hardware capabilities.

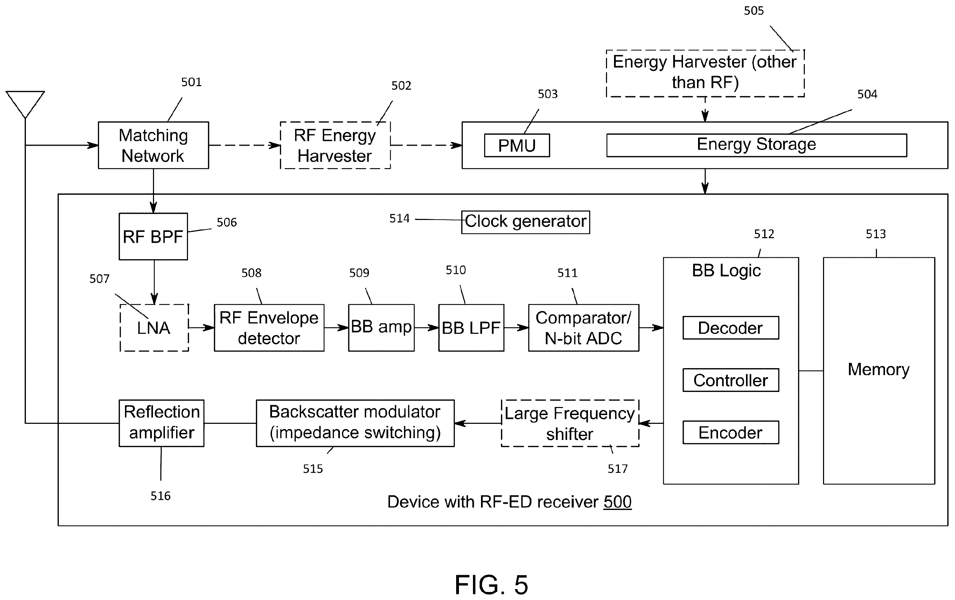

FIG. 5 illustrates an example architecture of an ultra-low power A-IoT device with an RF-ED receiver, according to an embodiment.

Referring to FIG. 5, device 500 includes additional components, compared to the device 400 of FIG. 4, for signal amplification and frequency management.

Device 500 includes an antenna connected to a matching network 501, an optional RF energy harvester 502, a PMU 503, and an energy storage component 504. In some embodiments, a supplemental energy harvester 505, such as a solar, thermal, or kinetic energy source, may provide additional energy to support transmission.

On the receive side, device 500 includes an RF BPF 506 and, optionally, a low-noise amplifier (LNA) 507 to boost weak incoming signals. An envelope detector 508 extracts the signal envelope, which is further amplified by a baseband amplifier 509, filtered through a baseband low-pass filter (BB LPF) 510, and digitized by either a comparator or analog-to-digital converter (ADC) 511.

The digitized signal is processed by baseband logic 512, which performs control and decoding operations, including the parsing of paging messages to identify whether the device has been addressed and to extract uplink resource configuration. A memory 513 stores system state and timing information. A clock generator 514 provides timing signals to coordinate receive and transmit operations.

For uplink communication, device 500 includes a backscatter modulator 515 and a reflection amplifier 516, allowing enhanced backscatter signal strength. A frequency shifter 517 may be included to generate an uplink signal in a different band than the received signal.

Device 500 is compatible in situations in which it does not receive full system information broadcasts. Instead, it relies on paging messages to obtain configuration for initial uplink transmissions (e.g., Msg1), including time-frequency allocation, modulation, and access slot control.

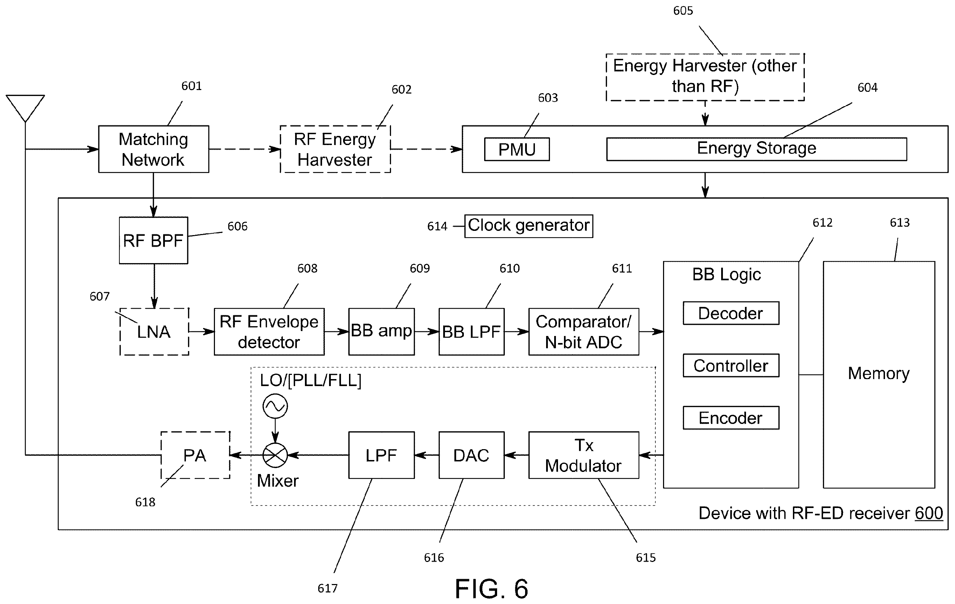

FIG. 6 illustrates an example architecture of an ultra-low power A-IoT device with an RF-ED receiver, according to an embodiment.

Referring to FIG. 6, device 600 shares certain low-power receive features with devices 400 and 500, respectively shown in FIGS. 4 and 5, but incorporates a fully integrated RF transmitter for autonomous uplink signaling.

Device 600 includes an antenna connected to a matching network 601, an optional RF energy harvester 602, a PMU 603, and an energy storage component 604. In some embodiments, a supplemental energy harvester 605, such as a solar, thermal, or kinetic energy source, may provide additional energy to support transmission.

On the receive side, device 600 includes an RF BPF 606 and, optionally, an LNA 607 to boost weak incoming signals. An envelope detector 608 extracts the baseband signal envelope from the filtered RF signal. This envelope is amplified by a baseband amplifier 609, passed through a BB LPF 610, and digitized by either a comparator or an ADC 611.

The digitized signal is processed by baseband logic 612, which may include decoding, control, and encoding functions. The baseband logic interfaces with memory 613 and operates under timing control from a clock generator 614. The logic is configured to extract resource allocation parameters from downlink paging messages, including access timing, frequency allocation, and modulation settings, to enable uplink transmission of an initial access message (Msg1) without requiring prior acquisition of full system information broadcasts.

For uplink communication, device 600 includes an RF transmitter chain comprising a transmit modulator 615, a digital-to-analog converter (DAC) 616, a LPF 617, a mixer, and a local oscillator (e.g., a phase-locked loop (PLL) or frequency-locked loop (FLL)). A power amplifier (PA) 618 optionally boosts the RF output signal for radiation via the antenna.

Compared to the device 500 of FIG. 5, device 600 enables active uplink transmission rather than backscatter modulation. Device 600 is compatible with A-IoT deployments, using simplified receiver processing and paging-driven configuration.

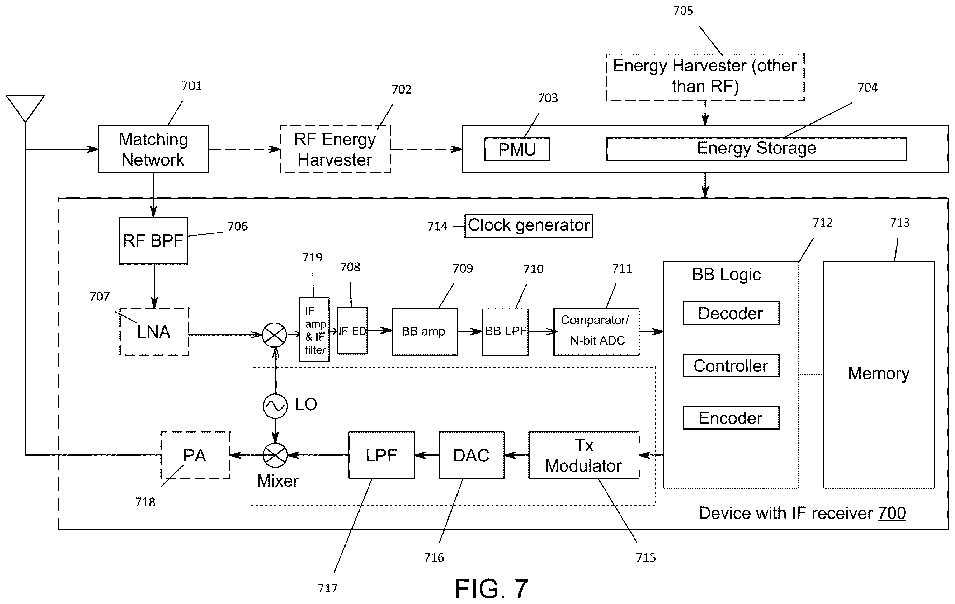

FIG. 7 illustrates an example architecture of an ultra-low power A-IoT device with an IF receiver, according to an embodiment.

Referring to FIG. 7, device 700 shares certain low-power receive features with devices 400, 500, and 600, respectively shown in FIGS. 4, 5, and 6, but incorporates a frequency down conversion and IF processing in the reception chain.

Device 700 includes an antenna connected to a matching network 701, an optional RF energy harvester 702, a PMU 703, and an energy storage module 704. In some embodiments, an additional energy harvester 705, such as a solar, thermal, or kinetic source, may provide additional energy to support transmission.

On the receive side, device 700 includes an RF BPF 706 and, optionally, an LNA 707 to improve front-end signal gain. The amplified signal is mixed with an LO signal in a down conversion mixer, resulting in an IF signal that is processed by an IF amplifier and filter 719. An IF envelope detector (IF-ED) 708 extracts the signal envelope at the IF. The envelope is then amplified by a baseband amplifier 709, passed through a BB LPF 710, and digitized using either a comparator or an ADC 711.

The resulting digital signal is processed by baseband logic 712, which includes decoding, controlling, and encoding functionality. A memory module 713 stores relevant state and configuration information. The baseband logic operates under timing control provided by a clock generator 714, and is configured to extract resource allocation information from paging messages to schedule uplink transmissions.

For uplink communication, device 700 includes an RF transmitter chain 715 comprising a transmit modulator, DAC 716, transmit LPF, mixer 717, and the LO. A PA 718 may optionally be used to boost the output signal power prior to transmission.

Compared to the device 600 of FIG. 6, device 700 includes an IF receiver chain, offering improved frequency selectivity and noise rejection through down conversion and IF filtering. Device 700 is compatible with minimal-link A-IoT deployments, using envelope detection at the IF stage and paging-driven configuration to support efficient initial access without requiring full system acquisition or fast Fourier transform (FFT)-based demodulation.

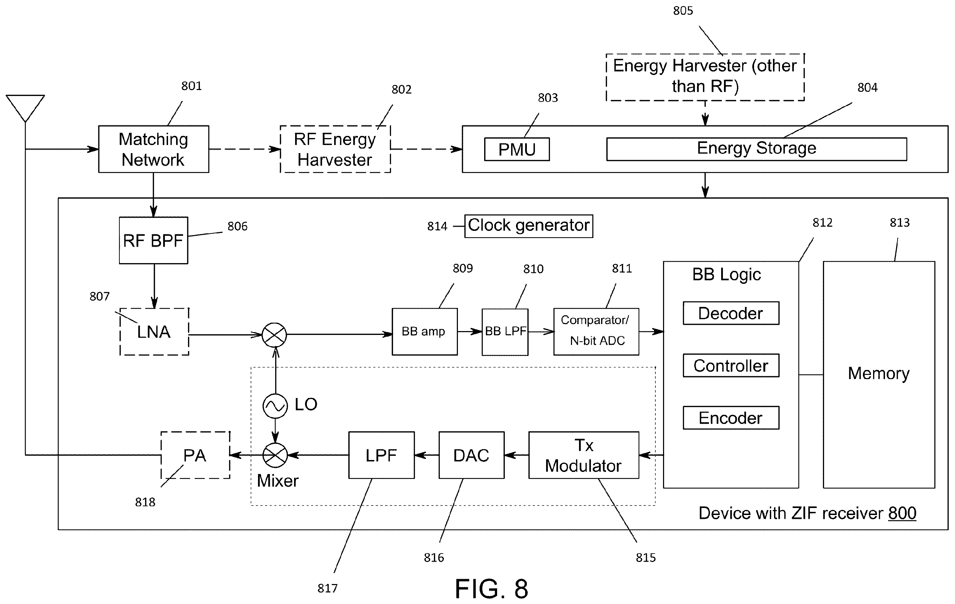

FIG. 8 illustrates an example architecture of an ultra-low power A-IoT device with a ZIF receiver, according to an embodiment.

Referring to FIG. 8, device 800 shares certain low-power receive features with devices 400, 500, 600, and 700, respectively shown in FIGS. 4-7, but incorporates a direct-conversion ZIF architecture in the reception chain.

Device 800 includes an antenna connected to a matching network 801, an optional RF energy harvester 802, a PMU 803, and an energy storage module 804. In some embodiments, an additional energy harvester 805, such as a solar, thermal, or kinetic source, may provide additional energy to support transmission.

On the receive side, device 800 includes an RF BPF 806 and, optionally, an LNA 807 to improve front-end signal gain. The amplified signal is directly mixed down to baseband via a mixer driven by a LO, forming a ZIF signal that bypasses IF stages. The resulting baseband signal is amplified by a baseband amplifier 809, passed through a BB LPF 810, and digitized using either a comparator or an ADC 811.

The resulting digital signal is processed by baseband logic 812, which includes decoding, control, and encoding functionality. A memory module 813 stores relevant state and configuration information. The baseband logic operates under timing control provided by a clock generator 814 and is configured to extract resource allocation information from paging messages to schedule uplink transmissions.

For uplink communication, device 800 includes an RF transmitter chain 815 comprising a transmit modulator, DAC 816, transmit LPF, mixer 817, and LO. A PA 818 may optionally be used to boost the output signal power prior to transmission.

Compared to the device 700 of FIG. 7, device 800 includes a ZIF receiver chain, simplifying the hardware by eliminating IF filtering and associated components. Device 800 is compatible with minimal-link A-IoT deployments, using direct-conversion envelope detection and paging-driven configuration to support efficient initial access without requiring full system acquisition or FFT-based demodulation.

In various embodiments, AS procedures for A-IoT devices are tailored to support minimal-link operation. Unlike new radio (NR) cellular protocols that rely on full system acquisition, synchronization signals, and structured physical random access channel (PRACH)-based access, the procedures described herein minimize downlink complexity and signaling overhead.

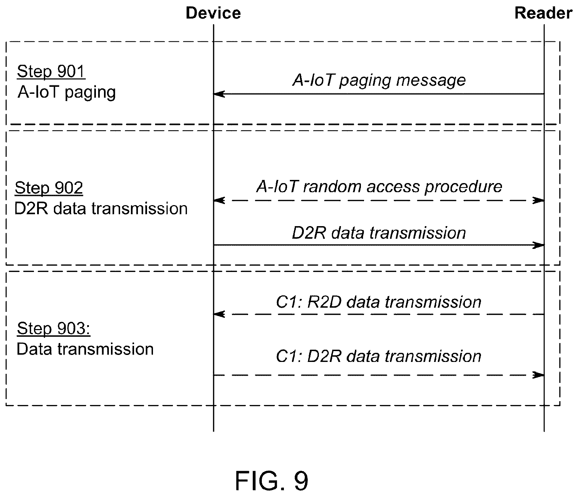

FIG. 9 is a signaling diagram illustrating an AS procedure between an A-IoT device and reader, according to an embodiment.

Referring to FIG. 9, in step 901, an A-IoT paging message is transmitted from the reader (e.g., a network node) to the device. The paging message may be initiated by a service request, and identify the device and/or include configuration parameters for uplink access, such as time-frequency resources, modulation schemes, and slot-based contention windows. This paging-driven configuration enables the device to immediately engage in uplink transmission without decoding system information blocks (SIBs) or performing FFT-based demodulation. Additionally or alternatively, a separate R2D message may be sent (in addition to the paging message) to indicate the start of a set of Msg1 resources configured in the paging message.

In step 901, the device transmits a D2R transmission (e.g., a device ID) to the reader. The D2R transmission may be performed via the A-IoT random access procedure based on parameters included in the A-IoT paging message, or can be transmitted without using the A-IoT random access procedure.

Accordingly, the paging message and the D2R transmission data, may serve as the primary mechanism for delivering both device identification and access configuration. The paging message may be transmitted by a reader, gateway, or base station, and may be structured to be detectable by devices using envelope detection or other simplified receiver architectures. Unlike other types of cellular paging, which primarily serves to alert a device of pending downlink data, the A-IoT paging message described herein may include access parameters that directly enable uplink transmission. The paging message may contain the identifier of a single device, a group ID that maps to multiple devices, multiple individual IDs, or no ID at all, effectively broadcasting the message to all A-IoT devices within range. These flexible addressing modes allow the network to adapt to varying deployment scenarios, such as selective wake-up, group-based inventory, or system-wide triggering.

The paging message may include or reference information that enables the receiving device to determine the resources it should use to respond via an uplink message (e.g., Msg1 or D2R transmission). These resources may be indicated implicitly or explicitly, and may be configured dynamically, preconfigured at the device, or derived through agreed network behavior. In some embodiments, the response resources may be dedicated or shared, depending on system design and deployment scale. Devices may monitor for such paging messages when sufficient energy is available, and/or may wake intermittently based on internal energy storage and harvesting status.

The A-IoT paging mechanism can support various operational modes. In an "inventory-only" mode, the paging message triggers devices to identify themselves, either through random access or a direct transmission. In an "inventory and command" mode, the procedure may include an initial device identification step followed by an R2D command and an optional D2R response. In some cases, a "command-only" mode may be supported, where the paging message itself may embed the command, or the command may follow after the device identifies itself. These modes allow the network to initiate lightweight interactions ranging from presence detection to simple command execution, all within the constraints of a minimal-link A-IoT operation.

In step 901, the device and the reader have configured for data transmission, and R2D data transmission for sending a command occurs, or D2R data transmission for a corresponding response to a command occurs.

In some embodiments, the random access procedure for A-IoT devices is based on a slotted ALOHA protocol, which provides a lightweight and scalable mechanism for resolving contention among multiple devices attempting to access the network. In slotted ALOHA, time is divided into discrete access slots, and each device independently selects a slot at random within a defined access window to transmit its initial message. Because multiple devices may select the same slot, collisions can occur; however, the system tolerates such collisions and allows for retry mechanisms in subsequent access windows. Accordingly, this decentralized, probabilistic access method avoids the complexity of centralized scheduling and can be used in large populations of low-power devices with unpredictable transmission needs.

An access occasion may refer to a defined time resource, a frequency resource, and/or a time-frequency resource during which an A-IoT device may attempt to transmit its initial uplink message (e.g., Msg1). A set of access occasions may be configured for one or more devices to support structured contention-based access while using a small amount of energy. Access occasions may be scheduled by the network via an R2D message, such as a paging message. The paging message may include a field indicating the number of access occasions available. For example, a 4-bit field may be used to signal the number of access occasions, where the binary value 0000 may correspond to 2⁰ = 1 access occasion, 0001 to 2¹ = 2 access occasions, 0010 to 2² = 4 access occasions, and so forth, up to 1111 indicating 2¹⁵ = 32,768 access occasions. This exponent-based encoding scheme allows compact signaling of a wide range of access occasion quantities.

In various embodiments, the random access procedure for A-IoT devices is initiated by the reader through a downlink paging message or equivalent R2D signaling (e.g., steps 901 and 902 in FIG. 9). This paging message may trigger random access for a single A-IoT device, a group of devices identified by a common group ID, or all A-IoT devices within the coverage area. Upon receiving the paging message, the A-IoT device may first determines the type of random access that applies, either contention-free or contention-based, based on configuration information included in the message.

In the case of contention-free random access, the reader assigns a dedicated D2R access occasion or resource to the device. The A-IoT device may use the indicated resource to perform its uplink transmission directly, skipping contention resolution entirely. This approach may be used for latency-sensitive communications where collision avoidance is necessary. In contrast, if the paging message indicates contention-based random access (CBRA), the A-IoT device may select a transmission opportunity within a set of access occasions provided by the reader. For example, in a time division multiple access (TDMA)-based configuration, the device may randomly select one slot from among the available access occasions and prepare to transmit its initial message.

If the device performs contention resolution, at the start of its selected access occasion, the A-IoT device transmits an A-IoT Msg1, which may include a randomly generated 16-bit identifier. In some cases, Msg1 may also include upper-layer data, depending on future standardization decisions. If the reader successfully receives Msg1, it can respond with A-IoT Msg2, which echoes the received 16-bit random ID. Upon receiving Msg2 and verifying that the echoed ID matches its own, the device may consider the contention resolution successful and may proceed with additional uplink communication if applicable (e.g., Msg3). If Msg2 is not received or the ID does not match, the device may interpret this as a failed access attempt due to a collision or reception error.

The system may support re-access attempts by the device in later access occasions, as controlled and scheduled by the reader. This allows the device to retry random access in the event of D2R transmission failure or contention resolution failure.

In slotted ALOHA-based A-IoT systems, devices often contend for network access by transmitting their identifiers during discrete, time-synchronized access slots. However, if two or more devices transmit during the same slot, a collision occurs and none of the messages are successfully received. These devices must then wait a random delay before retransmitting, leading to inefficiencies in throughput and access latency. Despite its simplicity, the throughput of slotted ALOHA protocols is often limited to approximately 35%, making it unsuitable for dense A-IoT deployments where potentially hundreds of devices may attempt access simultaneously. Accordingly, enhancements to the random access procedure are proposed herein to improve system performance while preserving the energy-efficient, low-complexity characteristics that define the A-IoT design philosophy.

To address these limitations, an access framework is proposed that replaces traditional radio resource control (RRC) signaling and rigid frame structures with a lightweight, paging-driven configuration process. For example, the reader may begin by transmitting an initial trigger message (e.g., paging message) that identifies the target device or group of devices. The selected devices then perform a random access procedure, and if successful, may proceed with data communication. Since RRC signaling is not supported in A-IoT systems, and because devices often lack synchronized frame timing, the configuration necessary for random access is embedded directly within the paging message.

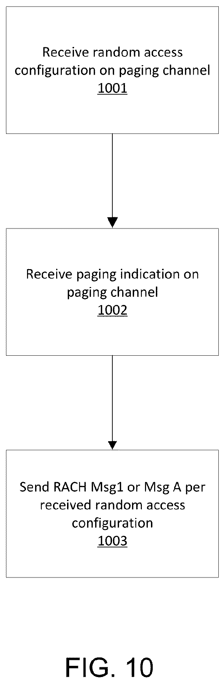

FIG. 10 is a flowchart illustrating operation of a device configuring random access transmissions, according to an embodiment. The device operating the method of FIG. 10 may be an electronic device including, but not limited to, the devices shown in FIGS. 4-8.

Referring to FIG. 10, the procedure for performing random access by an A-IoT device is initiated upon reception of a paging message that includes the necessary parameters for random access configuration. In step 1001, the device receives a random access configuration transmitted on the paging channel. This configuration enables the device to perform uplink access without higher-layer signaling and may include several elements. One such element is the time window length for Msg1 transmission, denoted as L_{W}. Upon receiving the paging message, the A-IoT device generates a random number within the range [0, L_{W}] and begins decrementing this value as a timer. When the countdown reaches zero, the device transmits Msg1, which includes a randomly generated ID for contention resolution. The random access configuration may also specify the frequency resource to be used for Msg1 transmission. This information may be explicitly provided or derived implicitly, for example, based on the carrier frequency used to transmit the control message. Additionally, the random access configuration may indicate the expected data rate and modulation format, such as OOK, BPSK, and/or binary frequency shift keying (BFSK), to be used during Msg1 transmission.

The device may also receive preamble configuration information in or with the paging message, which may specify the structure and selection rules for the preamble portion of Msg1. For example, the paging message may include a sequence length indicator (e.g., 1 bit) indicating whether the D2R preamble (or midamble) uses a short or long sequence (or an absent or present sequence). In some embodiments, the preamble configuration may be part of a broader D2R scheduling information field, which includes additional physical layer parameters.

In step 1002, the device also receives a paging indication (message). This indication informs the device that data transmission is expected and may be embedded within the same message as the random access configuration in step 1001. The paging message may target a specific device using an individual ID, a group of devices using a group ID, or all devices within range through broadcast.

Upon interpreting the configuration, in step 1003, the device transmits Msg1 (or Msg A) per the received random access configuration. If the procedure is CBRA, the device randomly selects a preamble from the set of available options. If the procedure is CFRA, the paging message identifies the preamble the device should use. Accordingly, the A-IoT device may initiate uplink access in an efficient manner without relying on RRC signaling.

In various embodiments, the performance of slotted ALOHA for A-IoT random access may be improved through access control enhancements that reduce collision rates and promote fair access across a large number of devices. One issue associated with slotted ALOHA-based protocols is the potential for channel collapse when too many devices attempt to access the medium simultaneously. This challenge is particularly acute in A-IoT systems due to the absence of RRC signaling and other scheduling mechanisms. To address these limitations, modifications are introduced herein to enable the network to influence device transmission behavior based on prior access outcomes.

According to an embodiment, a set of mechanisms may be employed to increase the effectiveness of slotted ALOHA-based random access in A-IoT systems. These mechanisms may include muting, slow-down, early-end, and silence mode techniques.

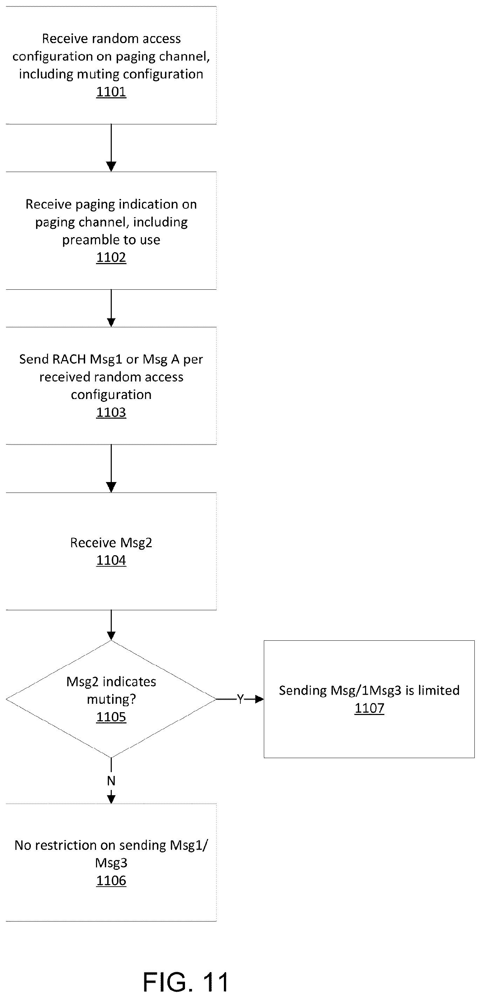

FIG. 11 is a flowchart illustrating an operation of a device incorporating a muting mechanism to manage A-IoT device transmissions, according to an embodiment. The muting mechanism may be applied, for example, after Msg1 transmission and Msg2 reception, or after Msg3 transmission and Msg4 reception. The device operating the method of FIG. 11 may be an electronic device including, but not limited to, the devices shown in FIGS. 4-8.

Referring to FIG. 11, the procedure begins at Step 1101, where the A-IoT device receives a random access configuration message via the paging channel. This configuration may include muting-related parameters such as a muting duration, an indication of whether the device may respond to paging while muted, parameters for selecting a random muting duration, and/or muting values associated with different device priority levels.

At step 1102, the device receives a paging indication (message). In the embodiment where muting is applied following Msg1, the paging indication may also specify a preamble to use for random access, or encode a device identifier within the preamble itself.

At step 1103, the device transmits Msg1 according to the previously received configuration. Msg1 may include a contention-based preamble and a random identifier used for access resolution. This step may be identical or similar in structure to step 1003 described in connection with FIG. 10.

At step 1104, the device receives Msg2 from the network. Msg2 includes a newly defined field referred to as the muting indicator (MI). If the MI field is set to "1", the device interprets this as a directive to apply muting according to the configuration received in Step 1101. If MI is set to "0", no muting is applied and the device proceeds as usual. Additionally or alternatively, a backoff indicator (BI) field may be included in Msg2, instructing the device to enter a backoff state and select a delay randomly within a specified range before attempting further transmissions. During this backoff period, the device is not permitted to transmit contention-based preambles.

At step 1105, the device evaluates the MI or BI field received in Msg2. If muting or backoff is not indicated, the device resumes normal operation and may proceed with subsequent message transmissions (e.g., Msg3) as appropriate, returning to the monitoring state described in step 1106. If muting or backoff is indicated in step 1105, the device enters a limited sending state (a waiting state) at step 1107. The muting duration may be a fixed time specified in the paging message or selected randomly according to the configured parameters. For example, the device may generate a random value upon receiving the muting command and begin decrementing the counter. When the countdown completes, the device resumes monitoring for paging messages and may once again transmit Msg1 or Msg3 as permitted.

The muting and backoff procedures may be selectively applied based on system design. In some embodiments, muting is applied after Msg1, based on the network node's (reader's) decision in Msg2. In others, muting may occur after Msg3, based on a directive included in Msg4. In such embodiments, separate muting or backoff indicators may be defined for Msg1 and Msg3 stages. Applying muting after Msg3 enables more precise access control after successful device identification.

In another embodiment, the reader may broadcast a silence command following successful reception of Msg3 and decoding of the device's identifier. This command, which may be included in a paging message, suppresses further transmissions by all other A-IoT devices until an acknowledgment (ACK) is transmitted by the reader or a predefined timer expires. The silence mode enables contention-free completion of communication sequences by temporarily halting background contention activity across the A-IoT device population.

In addition to the muting procedure described above with reference to FIG. 11, alternative techniques may be implemented to further enhance the performance and fairness of slotted ALOHA-based random access in A-IoT systems. These solutions may operate within the same minimal-link communication framework and offer flexible control over device behavior using low-complexity signaling.

In another embodiment, the A-IoT device may implement slotted ALOHA with slow down. Rather than preventing transmission entirely, the reader may issue a "slow down" command to the device, instructing it to apply a backoff delay before reinitiating access. This command may be transmitted in Msg4, following successful reception of Msg3 or a completed uplink data transmission. Upon receiving the slow down command, the A-IoT device may start a backoff timer, during which it refrains from transmitting additional contention-based preambles. The duration of the backoff may be determined using a BI included in Msg4, with the device selecting a random value between 0 and BI and decrementing the counter accordingly. In some embodiments, the device may add a random offset, which may be selected from a predefined or configured subset of values. These subsets may be indicated in the paging message and may vary based on the device type or transmission priority. The slowdown mechanism allows a device to complete its transmission sequence while temporarily suppressing further activity.

In another embodiment, slotted ALOHA with early end may be employed. In this approach, the reader may transmit an "early end" command in Msg2, indicating to the device that no additional transmissions (e.g., Msg3 or Msg4) are expected or permitted. This command effectively terminates the random access sequence for the addressed device or group of devices. Prior to issuing the early end command, the reader may broadcast a message to other devices instructing them to reduce their backoff counters. This "early end" command may be delivered via the paging channel and allow for expedited access by remaining devices once the primary interaction has concluded. The early end mechanism is particularly useful for inventory operations or scenarios where only the initial identification (Msg1) is required.

In another embodiment, a priority-based random access command may be used, in which the A-IoT device includes a priority value with a random ID or device ID in Msg1. Upon receiving multiple access attempts, the reader may select and respond to the device with the highest reported priority by echoing the corresponding ID in Msg2. The configuration for enabling priority-based access, including the format and encoding of priority values, may be included in the initial paging message.

In another embodiment, in scenarios where a slot-count parameter Q is used to manage access collisions, such as those derived from RFID protocols, the enhancements described above may be layered on top of the Q-based slot selection process. In this case, the reader may broadcast Q, and each device may randomly select a number in the range of 0 to 2^{Q-1}, and load this value into their respective slot counters. The counters begin counting down and decrease by 1 when each device receives a Query command. When the counter is decreased to 0, a device may begin responding to the reader
For example, if muting is indicated for a device, the device may pause its Q counter decrementing for a fixed number of QueryRep commands. In the context of priority-based random access, the Q decrement step may be adjusted dynamically: higher-priority devices may decrement by values greater than one, allowing them to reach transmission eligibility faster. These decrement values may be preconfigured or delivered via reader signaling, enabling adaptive contention behavior based on service requirements or deployment conditions.

To manage the high likelihood of collisions during random access procedures in A-IoT systems, framed slotted ALOHA may be used to control each A-IoT device to transmit only once within a configured time window. The devices are assumed to be time-synchronized with the reader at the frame boundary.

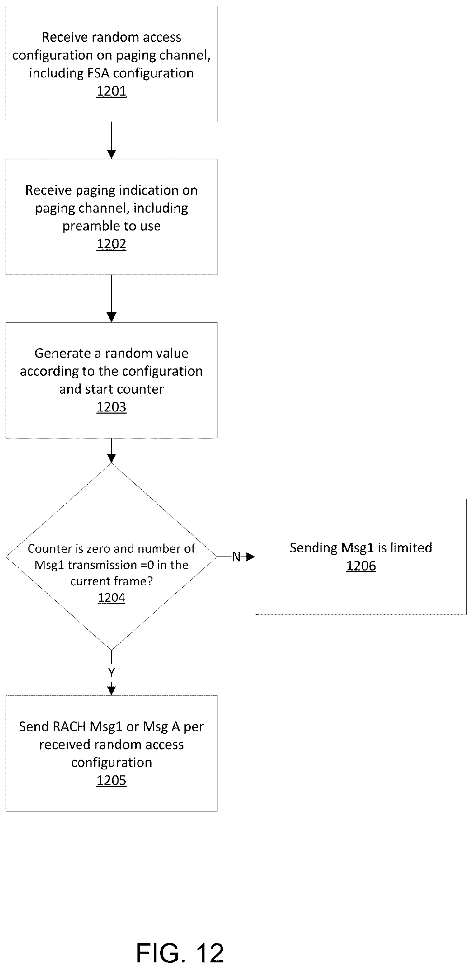

FIG. 12 is a flowchart illustrating an operation incorporating framed slotted ALOHA to manage A-IoT device transmissions, according to an embodiment. The device operating the method of FIG. 12 may be an electronic device including, but not limited to, the devices shown in FIGS. 4-8.

Referring to FIG. 12, at step 1201, the A-IoT device receives a random access configuration message via the paging channel. This configuration message may include parameters for performing framed slotted ALOHA, including identification of a frame structure, window duration, and specific parameters that govern the slotted contention behavior. The configuration may define whether enhancements such as detection-and-jump or dynamic window resizing are enabled, and may also include a reference to the start time and duration of the frame during which Msg1 transmissions are permitted.

At step 1202, the A-IoT device receives a paging indication (message) on the paging channel. This indication may specify that the device is being paged and may also include an identifier of the random access preamble to be used in Msg1. The paging indication may be implicitly or explicitly linked to the access configuration received in step 1201. For example, in some embodiments, a specific preamble value is embedded in the paging message to direct the A-IoT device to a particular frequency resource or random access opportunity.

At step 1203, the device generates a random value in accordance with the parameters of the framed slotted ALOHA configuration and begins a countdown. This random value is selected from a range defined by a configuration (e.g., from the interval [0, length of the detection time window]) in the case of a detection-and-jump scheme. The countdown timer may begin immediately after the random value is generated. This delay may randomize the transmission time of each device within the frame, reducing the probability of collisions with other devices attempting access during the same window. Additionally, if the configuration includes detection-and-jump, the random timer may ensure Msg1 is transmitted during the detection window.

At step 1204, the device may determine whether the counter has expired (e.g., reached zero) and whether Msg1 has already been transmitted during the current frame. The condition that the number of Msg1 transmissions in the current frame is equal to zero may enforce the framed slotted ALOHA constraint that limits each device to one transmission per frame. If both conditions are satisfied, the method proceeds to step 1205. If either condition is not satisfied (e.g., the timer has not yet expired or the device has already transmitted Msg1 in the same frame), then the device may not perform transmission, and Msg1 transmission is limited, as shown in step 1206.

At step 1205, the A-IoT device transmits Msg1 or MsgA (a contention-free or grant-based message) using the preamble and/or configuration received in steps 1201-1202. Msg1 may include a contention-based preamble selected from a configured set and optionally include an identifier such as a random ID or device-specific ID. MsgA may be used in alternative random access procedures or system variants that support additional access message types. The timing and parameters of this transmission may be configured based on the previously received configuration and aligned with the frame-based timing control imposed by framed slotted ALOHA. In embodiments where detection-and-jump is used, the Msg1 transmitted in step 1205 may occur in the detection window, triggering a corresponding Msg2 response in the jump window from the reader if received successfully.

An additional enhancement to framed slotted ALOHA protocols may include dynamic framed slotted ALOHA, in which is the size of the time window in framed slotted ALOHA varies according to the number of A-IoT devices in the system. The time window size can be preconfigured and updated by the reader through the paging message. The reader may use an A-IoT device estimation function to update the time window size.

According to another embodiment, a mechanism for resolving collisions of Msg1 and Msg3 transmissions from multiple A-IoT devices may include sending one or more repetitions of these messages using enhanced slotted ALOHA techniques. These enhanced approaches introduce redundancy and explicit coordination to improve message detectability, particularly in congested environments. Two such approaches are described below: diversity slotted ALOHA (DSA) and contention resolution diversity slotted ALOHA (CRDSA). These techniques may be configured via paging messages and, in some cases, signaled through Msg2 depending on whether they are applied to Msg1 or Msg3.

In the case of DSA, an A-IoT device may transmit Msg1 or Msg3 more than once to increase the likelihood that at least one copy is successfully received. For example, the device may transmit Msg1 a predetermined number of times (e.g., twice), with a randomly selected time interval between the two transmissions. After sending the first instance of Msg1, the device may select a random value between 0 and X, where X is a value configured via the paging message. This random value may define the separation in time between the two Msg1 transmissions. The device may then start a countdown timer using the selected value, and upon expiration of the timer, transmit Msg1 again. When DSA is applied to Msg3, the same process may be used, except the value of X may be dynamically indicated in Msg2, enabling the reader to adjust the timing based on system conditions. While DSA may increase access robustness in low to moderate load scenarios, it can lead to reduced efficiency under high load conditions due to increased message traffic. To mitigate this drawback, successive interference cancellation (SIC) may be performed at the reader to separate and decode overlapping transmissions. In cases where a power imbalance exists between devices, SIC may enable the reader to extract individual Msg1 or Msg3 messages from overlapping transmissions. A configurable processing delay may be introduced, defined in the paging message or Msg2, to allow time for SIC to be completed prior to sending Msg2 or Msg4. The processing delay may depend on the type of reader (e.g., a BS or an intermediate node) and should be broadcast to neighboring devices to prevent unnecessary retransmissions or energy expenditure.

In the case of CRDSA, each A-IoT device may transmit multiple replicas (Nᵣₑₚ) of Msg1 or Msg3 within a time-division multiple access (TDMA) or frequency-division multiple access (FDMA) frame of N slots, where N is the number of slots in the frame. These Nᵣₑₚ replicas may be transmitted in randomly selected slots within the frame. Unlike DSA, each replica of Msg1 or Msg3 in CRDSA may include a pointer that identifies the slots of the other replicas. For example, if an A-IoT device transmits two replicas in slots 5 and 8, the copy in slot 5 may include a pointer to slot 8, and the copy in slot 8 may include a pointer to slot 5. If the reader successfully decodes one replica, it can then identify the locations of the remaining replicas and remove their interference using SIC. This recursive process enhances contention resolution and increases the number of successfully decoded messages in a single frame. To improve this functionality, each Msg1 or Msg3 may include a signaling field in its header indicating the locations of the associated replicas. The number of such fields may be determined by the configured repetition count Nᵣₑₚ, and each field may have a size equal to log₂ (N). Alternatively, to reduce signaling overhead, the location of each replica may be indicated relative to the current slot using a time resource indicator value (TRIV) field. The size of the TRIV field may be dependent on the configured values of N and Nᵣₑₚ.

The DSA and CRDSA mechanisms may be selectively enabled or disabled by the reader using Msg2. When these techniques are applied to Msg1, the corresponding configuration may be conveyed in the paging message. When applied to Msg3, the configuration may instead be included in Msg2. Accordingly, these enhancements may improve message detectability and collision resolution in A-IoT networks.

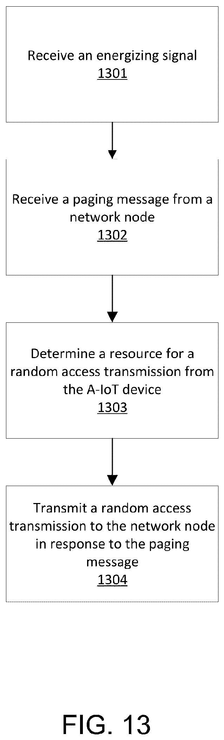

FIG. 13 is a flowchart illustrating a method for configuring random access communication for an A-IoT device, according to an embodiment.

Referring to FIG. 13, at step 1301, the A-IoT device receives an energizing signal. This signal may provide energy to activate the device's circuitry.

At step 1302, the device receives a paging message from a network node. The paging message may include configuration parameters, such as timing and frequency information, for the random access procedure.

In step 1303, the device determines a resource for random access based on the received parameters. This may involve selecting a time slot, frequency, or preamble to be used for the transmission.

At step 1304, the device transmits a random access message to the network node in response to the paging message. The random access message may include a temporary ID for contention resolution or other access-related information.

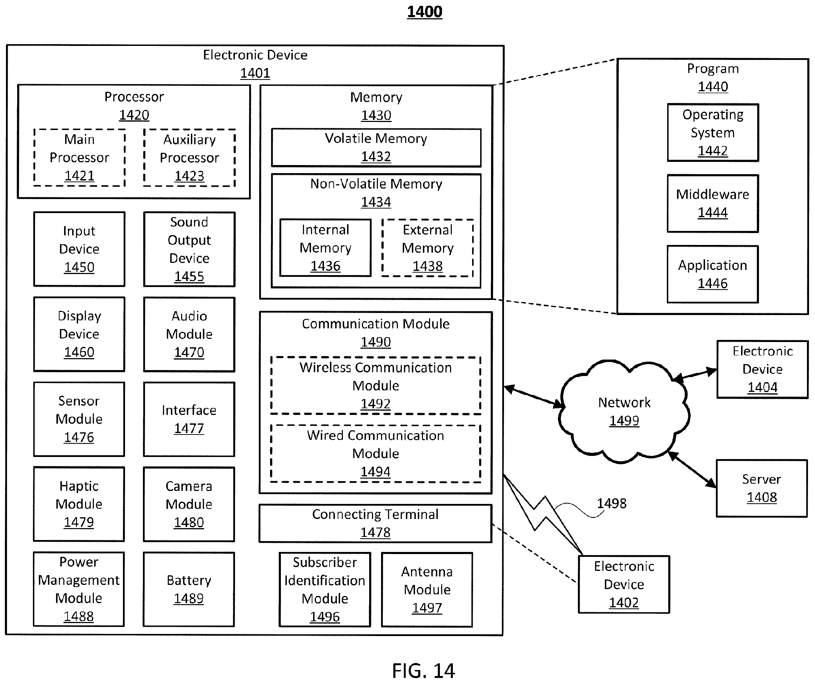

FIG. 14 is a block diagram of an electronic device in a network environment, according to an embodiment.

Referring to FIG. 14, an electronic device 1401 (e.g., an A-IoT device or reader) in a network environment 1400 may communicate with an electronic device 1402 via a first network 1498 (e.g., a short-range wireless communication network), or an electronic device 1404 or a server 1408 via a second network 1499 (e.g., a long-range wireless communication network). The electronic device 1401 may communicate with the electronic device 1404 via the server 1408. The electronic device 1401 may include a processor 1420, a memory 1430, an input device 1450, a sound output device 1455, a display device 1460, an audio module 1470, a sensor module 1476, an interface 1477, a haptic module 1479, a camera module 1480, a power management module 1488, a battery 1489, a communication module 1490, a subscriber identification module (SIM) card 1496, or an antenna module 1497. In one embodiment, at least one (e.g., the display device 1460 or the camera module 1480) of the components may be omitted from the electronic device 1401, or one or more other components may be added to the electronic device 1401. Some of the components may be implemented as a single integrated circuit (IC). For example, the sensor module 1476 (e.g., a fingerprint sensor, an iris sensor, or an illuminance sensor) may be embedded in the display device 1460 (e.g., a display).

The systems and methods described throughout this disclosure, including random access configuration, framed slotted ALOHA, DSA, and CRDSA procedures for A-IoT access, may be implemented by one or more components of the electronic device 1401 shown in FIG. 14. In particular, the processor 1420 may be configured to execute instructions stored in memory 1430 to process paging messages, extract random access parameters, generate preambles or identifiers for Msg1 and Msg3, and manage counter-based or slot-based transmission scheduling. The received configuration may include a frame duration, detection and jump window structure, repetition intervals, or slot allocations, which the processor 1420 may use to control timing and content of access attempts.

The communication module 1490 may include RF and baseband components necessary for transmitting and receiving messages in accordance with the received access configuration. The communication module 1490 may further support modulation and decoding of signaling fields used for enhanced access schemes, such as TRIVs or replica slot pointers.

In embodiments where the electronic device 1401 functions as a reader (e.g., a BS or intermediate node), the processor 1420 may also be responsible for detecting Msg1 or Msg3 collisions, initiating successive interference cancellation, and decoding replicas using slot pointer information. The auxiliary processor 1423 may assist with these tasks, such as for parallel decoding or SIC operations.

Additionally, the processor 1420 may execute software (e.g., a program 1440) to control at least one other component (e.g., a hardware or a software component) of the electronic device 1401 coupled with the processor 1420 and may perform various data processing or computations.

As at least part of the data processing or computations, the processor 1420 may load a command or data received from another component (e.g., the sensor module 1476 or the communication module 1490) in volatile memory 1432, process the command or the data stored in the volatile memory 1432, and store resulting data in non-volatile memory 1434. The processor 1420 may include a main processor 1421 (e.g., a central processing unit (CPU) or an application processor (AP)), and an auxiliary processor 1423 (e.g., a graphics processing unit (GPU), an image signal processor (ISP), a sensor hub processor, or a communication processor (CP)) that is operable independently from, or in conjunction with, the main processor 1421. Additionally or alternatively, the auxiliary processor 1423 may be adapted to consume less power than the main processor 1421, or execute a particular function. The auxiliary processor 1423 may be implemented as being separate from, or a part of, the main processor 1421.

The auxiliary processor 1423 may control at least some of the functions or states related to at least one component (e.g., the display device 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). The auxiliary processor 1423 (e.g., an image signal processor or a communication processor) may be implemented as part of another component (e.g., the camera module 1480 or the communication module 1490) functionally related to the auxiliary processor 1423.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434. Non-volatile memory 1434 may include internal memory 1436 and/or external memory 1438.

The program 1440 may be stored in the memory 1430 as software, and may include, for example, an operating system (OS) 1442, middleware 1444, or an application 1446.

The input device 1450 may receive a command or data to be used by another component (e.g., the processor 1420) of the electronic device 1401, from the outside (e.g., a user) of the electronic device 1401. The input device 1450 may include, for example, a microphone, a mouse, or a keyboard.

The sound output device 1455 may output sound signals to the outside of the electronic device 1401. The sound output device 1455 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1460 may visually provide information to the outside (e.g., a user) of the electronic device 1401. The display device 1460 may include, for example, a display, a hologram device, or a projector and control circuitry to control a corresponding one of the display, hologram device, and projector. The display device 1460 may include touch circuitry adapted to detect a touch, or sensor circuitry (e.g., a pressure sensor) adapted to measure the intensity of force incurred by the touch.

The audio module 1470 may convert a sound into an electrical signal and vice versa. The audio module 1470 may obtain the sound via the input device 1450 or output the sound via the sound output device 1455 or a headphone of an external electronic device 1402 directly (e.g., wired) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. The sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device 1402 directly (e.g., wired) or wirelessly. The interface 1477 may include, for example, a high- definition multimedia interface (HDMI), a universal serial bus (USB) interface, a secure digital (SD) card interface, or an audio interface.

A connecting terminal 1478 may include a connector via which the electronic device 1401 may be physically connected with the external electronic device 1402. The connecting terminal 1478 may include, for example, an HDMI connector, a USB connector, an SD card connector, or an audio connector (e.g., a headphone connector).

The haptic module 1479 may convert an electrical signal into a mechanical stimulus (e.g., a vibration or a movement) or an electrical stimulus which may be recognized by a user via tactile sensation or kinesthetic sensation. The haptic module 1479 may include, for example, a motor, a piezoelectric element, or an electrical stimulator.

The camera module 1480 may capture a still image or moving images. The camera module 1480 may include one or more lenses, image sensors, image signal processors, or flashes. The power management module 1488 may manage power supplied to the electronic device 1401. The power management module 1488 may be implemented as at least part of, for example, a power management integrated circuit (PMIC).

The battery 1489 may supply power to at least one component of the electronic device 1401. The battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the AP) and supports a direct (e.g., wired) communication or a wireless communication. The communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as BLUETOOTH^{™} wireless-fidelity (Wi-Fi) direct, or a standard of the Infrared Data Association (IrDA)) or the second network 1499 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The antenna module 1497 may transmit or receive a signal or power to or from the outside (e.g., the external electronic device) of the electronic device 1401. The antenna module 1497 may include one or more antennas, and, therefrom, at least one antenna appropriate for a communication scheme used in the communication network, such as the first network 1498 or the second network 1499, may be selected, for example, by the communication module 1490 (e.g., the wireless communication module 1492). The signal or the power may then be transmitted or received between the communication module 1490 and the external electronic device via the selected at least one antenna.

Commands or data may be transmitted or received between the electronic device 1401 and the external electronic device 1404 via the server 1408 coupled with the second network 1499. Each of the electronic devices 1402 and 1404 may be a device of a same type as, or a different type, from the electronic device 1401. All or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1401. The electronic device 1401 may provide the outcome, with or without further processing of the outcome, as at least part of a reply to the request. To that end, a cloud computing, distributed computing, or client-server computing technology may be used, for example.

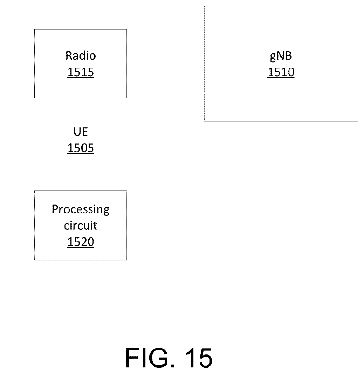

FIG. 15 is a system including a UE and a base station, in communication with each other, according to an embodiment.

Referring to FIG. 15, the UE may include a radio 1515 and a processing circuit (or a means for processing) 1520, which may perform various methods disclosed herein. For example, the processing circuit 1520 may receive, via the radio 1515, transmissions from a gNB (e.g., a BS, network node, satellite, or another electronic device) 1510, and the processing circuit 1520 may transmit, via the radio 1515, signals to the gNB 1510.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Additionally or alternatively, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method comprising:
receiving (1301), by an ambient Internet of Things, A-IoT, device (100, 400, 500, 600, 700, 800, 1401), an energizing signal;
receiving (1302), by the A-IoT device (100, 400, 500, 600, 700, 800, 1401), a paging message from a network node, the paging message including one or more configuration parameters,
determining (1303) a resource for a random access transmission from the A-IoT device (100, 400, 500, 600, 700, 800, 1401) using the one or more configuration parameters in the paging message, and
transmitting (1304), by the A-IoT device (100, 400, 500, 600, 700, 800, 1401), a random access transmission to the network node in response to the paging message.

2. The method of claim 1, wherein the one or more configuration parameters comprise at least one of:
a set of access occasions for the random access transmission,
a frequency resource,
a modulation format and data rate, or
a preamble configuration.

3. The method of claim 2, wherein the modulation format and data rate comprise at least one of on-off keying, OOK, binary phase shift keying, BPSK, or binary frequency shift keying, BFSK.

4. The method of claim 2 or 3, wherein the preamble configuration included in the paging message indicates to the A-IoT device (100, 400, 500, 600, 700, 800, 1401) which preamble to use if there are multiple preambles for random access transmission.

5. The method of any one of claims 1 to 4, wherein the one or more configuration parameters are based on the A-IoT device (100, 400, 500, 600, 700, 800, 1401) determining the start time of the random access transmission.

6. The method of any one of claims 1 to 5, further comprising receiving, by the A-IoT device (100, 400, 500, 600, 700, 800, 1401), a muting indication in a response to the random access transmission, wherein the muting indication instructs the A-IoT device (100, 400, 500, 600, 700, 800, 1401) to delay or refrain from additional random access transmissions for a period of time.

7. The method of any one of claims 1 to 6, wherein the one or more configuration parameters define a number of access occasions for the random access transmission, and the A-IoT device (100, 400, 500, 600, 700, 800, 1401) randomly selects one of the access occasions in which to transmit the random access transmission.

8. A non-transitory computer-readable medium storing instructions that, when executed by a processor (101, 1420) of an ambient Internet of Things, A-IoT, device (100, 400, 500, 600, 700, 800, 1401), cause the processor (101, 1420) to:
receive (1301) an energizing signal;
receive (1302) a paging message from a network node, the paging message including one or more configuration parameters;
determine (1303) a resource for a random access transmission using the one or more configuration parameters in the paging message; and
transmit (1304) a random access transmission to the network node in response to the paging message.

9. The non-transitory computer-readable medium of claim 8, wherein the one or more configuration parameters comprise at least one of:
a set of access occasions for the random access transmission,
a frequency resource,
a modulation format and data rate, or
a preamble configuration.

10. The non-transitory computer-readable medium of claim 9, wherein the modulation format and data rate comprise at least one of on-off keying, OOK, binary phase shift keying, BPSK, or binary frequency shift keying, BFSK.

11. The non-transitory computer-readable medium of claim 9 or 10, wherein the preamble configuration included in the paging message indicates to the A-IoT device (100, 400, 500, 600, 700, 800, 1401) which preamble to use if there are multiple preambles for random access transmission.

12. The non-transitory computer-readable medium of any one of claims 8 to 11, wherein the instructions further cause the processor (101, 1420) to transmit the random access transmission in a plurality of access occasions configured in the paging message, with each transmission occurring at a randomly selected access occasion.

13. The non-transitory computer-readable medium of any one of claims 8 to 12, wherein the instructions further cause the processor (101, 1420) to receive a muting indication in response to the random access transmission, wherein the muting indication instructs the A-IoT device (100, 400, 500, 600, 700, 800, 1401) to delay or refrain from additional random access transmissions for a period of time.
